# FASCICULE DE BREVET EUROPEEN

(11) **EP 2 128 002 B1**
(45) Date de publication et mention de la délivrance du brevet: **18.08.2010**
(21) Numéro de dépôt: 09160698.8
(22) Date de dépôt: 19.05.2009
(51) Int. Cl.: B62D 25/12

(54) **Doublure pour rigidifier un capot de vehicule et capot equipe de cette doublure**
Auskleidung zur Versteifung einer Motorhaube eines Fahrzeugs und Motorhaube mit einer solchen Auskleidung
Lining for reinforcing a vehicle hood and hood having such lining

(30) Priorité: 28.05.2008 FR 0853460
(43) Date de publication de la demande: 02.12.2009
(73) Titulaire: Peugeot Citroën Automobiles SA, 78943 Vélizy-Villacoublay Cedex (FR)
(72) Inventeur: Gaudiller, Régis, 92160, ANTONY (FR)
(74) Mandataire: Fernandez, Francis Lionel

(56) Documents cités:
- JP-A- 6 278 657
- JP-A- 8 301 145
- US-B1- 6 371 231

## Description

L'invention concerne une doublure et un capot de véhicule équipé de cette doublure.

Le déposant connaît des doublures de capots de véhicules présentant sensiblement la forme d'un quadrilatère à quatre angles.

Pour simplifier la description, on nomme « angles arrières » de la doublure les angles qui sont articulés sur le châssis du véhicule grâce à des charnières. On nomme « angles avants » les angles qui sont diagonalement opposés à l'un des angles arrières. Par la suite, on définit la droite et la gauche par rapport à une personne face à la doublure et située du côté des angles avants.

Il arrive qu'un utilisateur cherche à fermer le capot d'un véhicule automobile en oubliant de retirer la béquille qui maintient le capot ouvert. Dans ces conditions, à cause de l'effet levier, une force importante s'exerce au niveau du point d'appui de la béquille. En absence de renfort, cette force peut être suffisante pour plier ou tordre la doublure.

Pour remédier à cet inconvénient, il a été proposé de renforcer la structure de la doublure aux alentours du point d'appui à l'aide d'un renfort.

Par exemple, le déposant connaît une doublure de capot de véhicule automobile comprenant un renfort pour renforcer la résistance à la torsion de la doublure autour d'un point d'appui d'une béquille, ce renfort étant rigidement fixé dans un angle de la doublure par des points de fixation.

Un tel renfort est par exemple décrit dans la demande de brevet US 6 371 231 selon Le preambule de la revendition 1.

Par exemple, le renfort est situé dans l'angle arrière gauche de la doublure. Dans ce cas, des points de fixation sont alignés parallèlement au côté de la doublure qui relie l'angle arrière gauche à l'angle avant gauche.

Le déposant a constaté qu'avec un tel renfort, lorsque l'utilisateur appuie sur un point de traction situé dans l'angle avant droit, il arrive que le point de fixation le plus proche de l'angle avant droit soit arraché. Suite à cet arrachage, une partie ou la totalité du renfort se désolidarise de la doublure. Il ne remplit donc plus sa fonction de protection contre les torsions de la doublure.

L'invention vise à remédier à cet inconvénient en proposant une doublure de capot de véhicule plus résistante à l'arrachage des points de fixation.

Elle a donc pour objet une doublure de capot de véhicule dans laquelle au moins trois points de fixation, appelés points d'ancrage, sont alignés sur un axe d'ancrage perpendiculaire à un axe d'effort passant par le point d'appui de la béquille et par un point de traction situé sensiblement dans un angle diagonalement opposé à l'angle où est fixé le premier renfort.

Dans le capot ci-dessus, étant donné que les trois points d'ancrage sont alignés sur un axe perpendiculaire à l'axe d'effort, la force d'arrachage qui s'exerce sur les points d'ancrage se répartit sensiblement uniformément sur ces trois points d'ancrage lorsque l'utilisateur essaye de refermer le capot alors que la béquille est en place. Ainsi, la force d'ancrage à laquelle est soumis chacun de ces points d'ancrage peut être jusqu'à trois fois inférieure à celle que subit le point de fixation le plus proche du point d'appui dans une configuration telle que celle décrite dans US 6 371 231. Par conséquent, toutes caractéristiques étant égales par ailleurs, cette doublure est plus résistante à l'arrachage des points de fixation que si les points d'ancrage n'étaient pas alignés sur un axe perpendiculaire à l'axe d'effort.

Les modes de réalisation de cette doublure peuvent comporter une ou plusieurs des caractéristiques suivantes :
- parmi l'ensemble des points de fixation, les points d'ancrage sont situés les plus en avant du point d'appui en direction de l'angle diagonalement opposé
- la doublure comprend uniquement trois points de fixation alignés sur l'axe d'ancrage ;
- le renfort comporte des orifices ou des saillies destinées à recevoir des moyens de fixation sur la doublure d'une première charnière permettant un débattement du capot entre une position ouverte et une position fermée ;
- la doublure comprend un autre renfort comprenant des orifices ou des saillies destinées à recevoir des moyens de fixation sur la doublure d'une seconde charnière dans un autre angle de la doublure, cette seconde charnière permettant un débattement du capot entre sa position ouverte et sa position fermée, ce renfort étant uniquement conçu pour renforcer les moyens de fixation de la seconde charnière ;
- les points d'ancrage sont des points de soudure ;
- la doublure s'étend principalement dans un plan de doublure et les points d'ancrage sont réalisés entre des faces du renfort et de la doublure qui s'étendent parallèlement audit plan de doublure ;
- l'angle diagonalement opposé à l'angle où est fixé le premier renfort présente un sommet correspondant à l'intersection d'un premier et d'un second côtés du quadrilatère et le point de traction situé dans cet angle est au plus éloigné de ce sommet par une distance dₛ, où dₛ est inférieure à la moitié de la longueur du plus long des premier et second côtés ;
- la distance dₛ est inférieure au quart de la longueur du plus long des premier et second côtés.

Ces modes de réalisation de la doublure présentent en outre les avantages suivants :
- limiter le nombre de points d'ancrage à trois simplifie la réalisation de la doublure,
- prévoir des orifices ou des saillies dans le renfort pour recevoir les moyens de fixation de la première charnière permet également de renforcer à l'aide de la même pièce la fixation de cette charnière sur la doublure,
- prévoir un autre renfort dans un autre angle conçu uniquement pour renforcer les moyens de fixation de la charnière permet de limiter la masse de ce second renfort,
- utiliser des points de soudure en tant que points d'ancrage simplifie la réalisation de la doublure.

L'invention a également pour objet un capot de véhicule comprenant :
- une peau, et
- la doublure ci-dessus pour rigidifier cette peau.

L'invention sera mieux comprise à la lecture de la description qui va suivre, donnée uniquement à titre d'exemple non limitatif et faite en se référant aux dessins sur lesquels :
- la figure 1 est une illustration schématique et partielle de la partie avant d'un véhicule équipé d'une doublure de capot,
- la figure 2 est une illustration en perspective d'une face extérieure de la doublure de capot du véhicule de la figure 1,
- la figure 3 est une illustration schématique et en perspective d'un renfort et d'une béquille de la doublure de la figure 2,
- la figure 4 est une illustration en perspective d'une face intérieure de l'angle arrière gauche de la doublure de la figure 2, et
- la figure 5 est une illustration schématique et en coupe partielle de la doublure de capot de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

On désigne par «face extérieure » et « face intérieure » d'une pièce, les faces de cette pièce tournée, respectivement, vers l'intérieur et l'extérieur du véhicule. De même, on désigne par « côté extérieur » et « coté intérieur » d'une pièce, les côtés de cette pièce tournée, respectivement, vers l'intérieur et l'extérieur du véhicule.

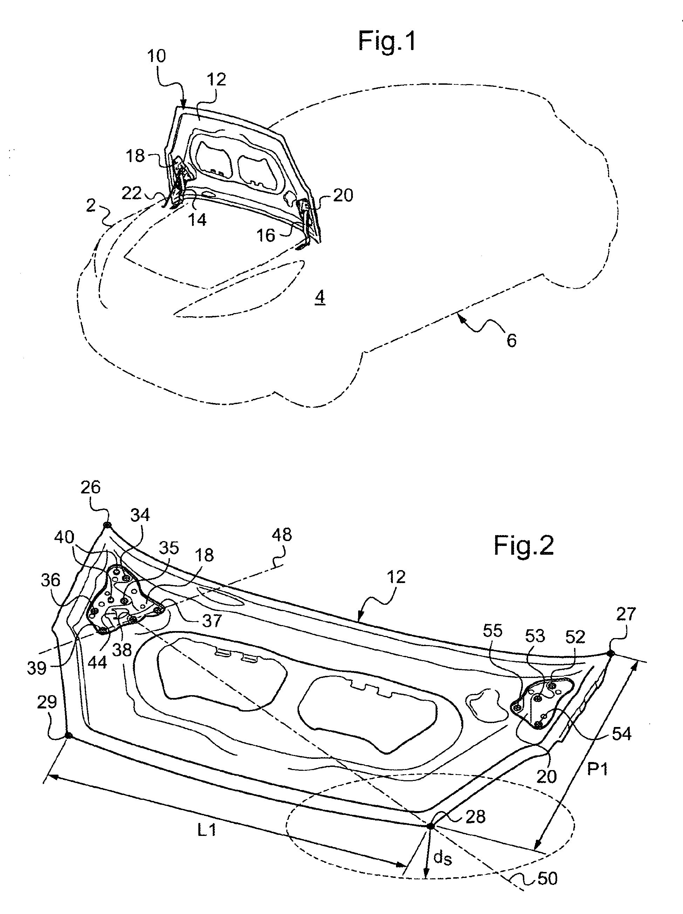

La figure 1 représente schématiquement des ailes avant gauche 2 et droite 4 d'un véhicule 6. Le véhicule 6 est par exemple un véhicule automobile tel qu'une voiture.

Le véhicule 6 comprend un capot 10 déplaçable entre une position ouverte dans laquelle un utilisateur peut accéder au moteur du véhicule 6 et une position fermée dans laquelle l'accès au moteur du véhicule 6 est impossible. Sur la figure 1, le capot 10 est représenté dans la position ouverte.

Le capot 10 est mécaniquement raccordé au châssis du véhicule 6 par l'intermédiaire de charnières 14 et 16. Typiquement, ces charnières 14 et 16 permettent au capot 10 de pivoter autour d'un axe horizontal entre sa position ouverte et sa position fermée.

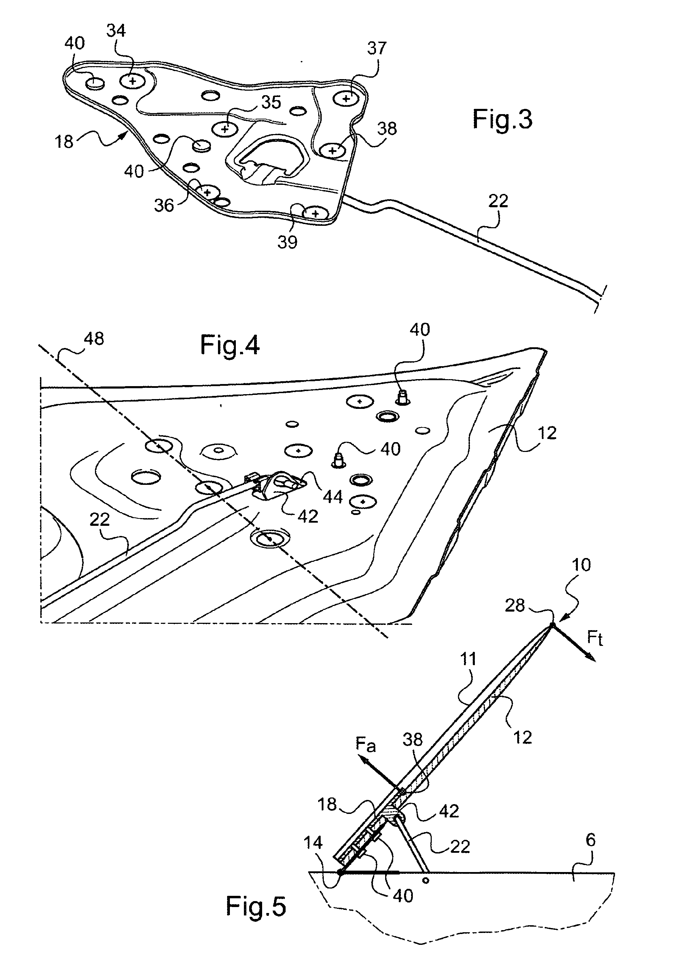

Le capot 10 est formé d'une mince peau extérieure 11 (Figure 5). Par exemple, la peau 11 est réalisée dans une tôle dont l'épaisseur est inférieure à 0,7mm. Pour rigidifier et supporter cette peau 11, une doublure 12 est fixée du côté intérieur de la peau. Sur les figures 1 à 4, seule la doublure 12 a été représentée. Par exemple, la doublure 12 est réalisée par emboutissage d'une tôle de plus de 1,4mm d'épaisseur.

La doublure 12 comprend des renforts 18 et 20 situés, respectivement, dans les angles arrières gauche et droit de la doublure 12. Plus précisément, ces renforts 18, 20 sont situés en vis-à-vis, respectivement, des charnières 14 et 16. Les renforts 18 et 20 sont fixés sur la face supérieure de la doublure 12. Sur la figure 1, les renforts 18 et 20 sont rendus visibles par transparence au travers de la doublure 12.

Ici, la doublure 12 comprend également une béquille 22 propre à maintenir le capot 10 dans sa position ouverte lorsque cette béquille 22 est en appui d'un côté sur le renfort 18 et de l'autre côté sur le châssis du véhicule 6.

La doublure 12 va maintenant être décrite plus en détail en regard des figures 2 à 5.

La doublure 12 présente sensiblement la forme d'un quadrilatère dont les quatre sommets sont représentés par des points 26 à 29 sur la figure 2. La doublure 12 s'étend principalement dans un plan de doublure. Ici, les sommets 26 à 26 sont situés dans ce plan de doublure. Les sommets 26 et 27 correspondent, respectivement, aux sommets des angles arrière gauche et droit de la doublure 12. Les sommets 28 et 29 correspondent quant à eux aux sommets des angles avant droit et avant gauche de la doublure 12.

Ici, ce quadrilatère est un trapèze dont le plus grand côté ou base est entre les sommets 26 et 27. Ce plus grand côté correspond à l'arrière de la doublure 12.

La distance la plus courte entre les sommets 27 et 28 est appelée profondeur P1. La distance la plus courte entre les sommets 28 et 29 est appelée largeur L1.

Sur la figure 2, seule la face supérieure de la doublure 12 est visible.

Le renfort 18 est fixé sur la face supérieure de la doublure 12 par six points de fixation 34 à 39. Ici, ces points de fixation 34 à 39 sont des points de soudure. Sur la figure 2, ils sont représentés par une croix située au centre d'un rond.

Le renfort 18 comprend des orifices ou des saillies pour recevoir des moyens de fixation de la charnière 14 sur la doublure 12. Ici, le renfort 18 présente deux saillies 40 (Figure 4) qui s'étendent à travers des trous ménagés dans la doublure pour faire saillie du côté de sa face inférieure. Par exemple, ces saillies 40 sont des boulons propres à recevoir des écrous de fixation de la charnière 14.

Le renfort 18 comprend une languette 42 (Figures 4 et 5) qui s'étend perpendiculairement au plan de doublure et traverse la doublure 12 par un orifice 44 pour faire saillie au-delà de la face inférieure de cette doublure. Cette languette 42 forme un point d'appui pour la béquille 22 lorsque celle-ci maintient le capot 10 dans la position ouverte. Ici, la béquille 22 est montée à rotation sur la languette 42. Par exemple, une extrémité coudée de la béquille 22 est insérée dans un trou traversant la languette 42 (Figure 4). La languette 42 est plus proche du sommet 26 que du sommet 29.

Les points de fixation 37 à 39 sont situés en avant de la languette 42 dans la direction du sommet 28. De par cette position, ces points de fixation forment des points d'ancrage qui augmentent la résistance à la torsion de la doublure 12 autour du point d'appui 42 de la béquille 22. Ces points 37 à 39 de fixation particuliers sont aussi appelés points d'ancrage dans la suite de la description.

Ici, les points 37 et 39 sont réalisés entre des faces du renfort 18 et de la doublure 12 qui s'étendent sensiblement parallèlement au plan de doublure. « sensiblement » signifie ici que l'angle entre le plan de doublure et le plan de ces faces est égal à 0° à plus ou moins 15° près.

Les points 37 à 39 sont ceux qui supporte quasiment l'intégralité d'une force d'arrachage Fa (Figure 5) tendant à séparer le renfort 18 de la doublure 12 lorsqu'une force de traction Ft (Figure 5) est appliquée vers le bas au niveau du sommet 28 alors que la béquille 22 est en place.

Pour répartir le plus uniformément possible cette force d'arrachage Fa entre les trois points 37 à 39, ces points sont alignés sur un axe 48 d'ancrage. Cet axe 48 est perpendiculaire à un axe d'effort 50. L'axe 50 passe par la projection de la languette 42 dans le plan de doublure et par un point de traction situé dans l'angle avant droit. Ce point de traction peut être compris comme étant le point de la doublure 12 sur lequel s'exerce l'essentielle de la force de traction Ft exercée par un utilisateur sur le capot 10 lorsqu'il souhaite le refermer.

Ici, on considère que ce point de traction est situé dans l'angle avant droit si la distance entre le sommet 28 et ce point de traction est inférieure à une distance dₛ. Sur la figure 2, la distance dₛ est représentée par un cercle s'étendant dans le plan de doublure et centré sur le sommet 28. La distance dₛ est inférieure à la moitié de la largeur L₁ et, de préférence, inférieure au quart de la largeur L₁. De préférence, la distance dₛ est également inférieure à la moitié de la profondeur P1 et, de préférence, inférieure au quart de la profondeur P1. Par exemple, la distance dₛ est inférieure à 50cm ou à 25cm.

Sur la figure 2, l'axe 50 est représenté dans le cas préféré où le point de traction est confondu avec le sommet 28. En effet, ce cas est celui ou l'effet de levier est le maximum car le sommet 28 est le point de la doublure le plus éloigné de la languette 42. Toutefois, le point de traction utilisé pour définir l'axe d'effort peut être placé ailleurs tout en restant dans l'angle avant droit.

Le renfort 20 est fixé sur la face supérieure de la doublure 12 à l'aide de quatre points de fixation 52 à 55. Par exemple, ces points 52 à 55 sont des points de soudure.

Ici, le renfort 20 est uniquement conçu pour recevoir des moyens de fixation de la charnière 20. Il ne comporte donc aucun point d'ancrage similaire au point 37 à 39. Ainsi, le renfort 20 permet d'obtenir une résistance à l'arrachage de la charnière 16 au moins égale à celle obtenue avec le renfort 18 mais en utilisant moins de matière et donc avec une masse strictement inférieure à la masse du renfort 18.

Le fonctionnement du capot 10 va maintenant être décrit plus en détail en regard du schéma de la figure 5. La figure 5 représente le capot 10 dans sa position ouverte. Plus précisément, le capot 10 est maintenu dans cette position ouverte par la béquille 22 qui prend appui d'un côté directement sur la languette 42 et de l'autre côté sur le châssis du véhicule 6.

Lorsque la force de traction Ft est exercée par un utilisateur pour refermer le capot 10 alors que la béquille 22 est encore en place, le point d'ancrage 38 est soumis à la force d'arrachage Fa tendant à séparer le renfort 18 de la doublure 12.

Ici, étant donné que l'axe d'ancrage 48 est sensiblement perpendiculaire à l'axe d'effort, cette force d'arrachage Fa se répartit sensiblement uniformément entre les trois points 37 à 39. Ainsi, dans ce mode de réalisation, chaque point 37 à 39 est uniquement soumis au tiers de la force Fa. Par conséquent, pour arracher les points 37 à 39, il faudrait exercer une force d'arrachage Fa qui soit trois fois supérieure à celle nécessaire pour arracher un seul point d'ancrage. Le positionnement de l'axe 48 par rapport à l'axe 50 permet donc de rendre plus difficile l'arrachage du renfort 18 lorsqu'une force de traction Ft est exercée dans l'angle avant droit alors que la béquille 22 n'a pas été repliée.

De nombreux autres modes de réalisation sont possibles. Par exemple, plus de trois points de fixation peuvent être alignés le long de l'axe 48 afin de répartir la force d'arrachage Fa sur plus de trois points.

Les points de fixation peuvent être réalisés par d'autres moyens qu'une soudure. Par exemple, des boulons peuvent être utilisés.

La béquille 22 peut être solidaire de la doublure 12 ou au contraire solidaire du châssis du véhicule 6.

En variante, le renfort 18 est dépourvu de saillie ou d'orifice destiné à recevoir les moyens de fixation de la charnière 14.

## Revendications

1. Doublure (12) pour rigidifier la peau (11) d'un capot (10) de véhicule, cette doublure (12) présentant sensiblement la forme d'un quadrilatère à quatre angles et comprenant un renfort (18) pour renforcer la résistance à la torsion de la doublure (12) autour d'un point d'appui (42) d'une béquille (22), ce renfort étant rigidement fixé dans un premier angle de la doublure (12) par des points de fixation (34 à 39),
**caractérisé en ce que** au moins trois points de fixation (37 à 39), appelés points d'ancrage, sont alignés sur un axe d'ancrage (48) perpendiculaire à un axe d'effort (50) passant par le point d'appui (42) de la béquille (22) et par un point (28) de traction situé sensiblement dans un angle diagonalement opposé à l'angle où est fixé le premier renfort (18).

2. Doublure selon la revendication 1, dans laquelle, parmi l'ensemble des points de fixation, les points d'ancrage (37 à 39) sont situés les plus en avant du point d'appui (42) en direction de l'angle diagonalement opposé.

3. Doublure selon l'une quelconque des revendications précédente, dans laquelle la doublure (12) comprend uniquement trois points (37 à 39) de fixation alignés sur l'axe d'ancrage (48).

4. Doublure selon l'une quelconque des revendications précédentes, dans laquelle le renfort (18) comporte des orifices ou des saillies (40) destinées à recevoir des moyens de fixation sur la doublure (12) d'une première charnière permettant un débattement du capot (10) entre une position ouverte et une position fermée.

5. Doublure selon la revendication 4, dans laquelle la doublure (12) comprend un autre renfort (20) comprenant des orifices ou des saillies destinées à recevoir des moyens de fixation sur la doublure (12) d'une seconde charnière dans un autre angle de la doublure (12), cette seconde charnière permettant un débattement du capot (10) entre sa position ouverte et sa position fermée, ce renfort (20) étant uniquement conçu pour renforcer les moyens de fixation de la seconde charnière.

6. Doublure selon l'une quelconque des revendications précédentes, dans laquelle les points d'ancrage (37 à 39) sont des points de soudure.

7. Doublure selon l'une quelconque des revendications précédentes, dans laquelle la doublure (12) s'étend principalement dans un plan de doublure et les points d'ancrage (37 à 39) sont réalisés entre des faces du renfort (20) et de la doublure (12) qui s'étendent parallèlement audit plan de doublure (12).

8. Doublure selon l'une quelconque des revendications précédentes, dans laquelle l'angle diagonalement opposé à l'angle où est fixé le premier renfort (18) présente un sommet (28) correspondant à l'intersection d'un premier et d'un second côtés du quadrilatère et le point de traction situé dans cet angle est au plus éloigné de ce sommet (28) par une distance dₛ, où dₛ est inférieure à la moitié de la longueur du plus long des premier et second côtés.

9. Doublure selon la revendication 8, dans laquelle la distance dₛ est inférieure au quart de la longueur du plus long des premier et second côtés.

10. Capot de véhicule comprenant :
- une peau (11), et
- une doublure (12) pour rigidifier cette peau,
**caractérisé en ce que** la doublure (12) est conforme à l'une quelconque des revendications précédentes.

## Claims

1. Lining (12) to stiffen the skin (11) of a vehicle hood or bonnet (10), this lining (12) being substantially in the shape of a four-cornered quadrilateral and comprising a reinforcement (18) to enhance the torsional strength of the lining (12) about the point of support (42) of a bonnet strut (22), this reinforcement being rigidly attached to a first corner of the lining (12) by fixing points (34 to 39),
**characterized in that** at least three fixing points (37 to 39), known as anchoring points, are aligned on an anchoring axis (48) perpendicular to a load axis (50) passing through the support point (42) of the bonnet strut (22) and through a tension point (28) situated substantially in an angle diagonally opposite the angle at which the first reinforcement (18) is attached.

2. Lining according to Claim 1, in which, of all the fixing points, the anchoring points (37 to 39) are the ones situated furthest forward of the support point (42) in the direction of the diagonally opposite angle.

3. Lining according to either one of the preceding claims, in which the lining (12) comprises just three fixing points (37 to 39) aligned along the anchoring axis (48).

4. Lining according to any one of the preceding claims, in which the reinforcement (18) has orifices or projections (40) intended to accept the means of fixing to the lining (12) a first hinge that allows the bonnet (10) to move between an open position and a closed position.

5. Lining according to Claim 4, in which the lining (12) comprises another reinforcement (20) comprises orifices or projections intended to accept means of fixing to the lining (12) a second hinge in another corner of the lining (12), this second hinge allowing the bonnet (10) to move between its open position and its closed position, this reinforcement (20) being designed only to reinforce the means of attachment of the second hinge.

6. Lining according to any one of the preceding claims, in which the anchoring points (37 to 39) are spot welds.

7. Lining according to any one of the preceding claims, in which the lining (12) extends chiefly in a lining plane and the anchoring points (37 to 39) are produced between faces of the reinforcement (20) and of the lining (12) that run parallel to the said lining (12) plane.

8. Lining according to any one of the preceding claims, in which the angle diagonally opposite the angle at which the first reinforcement (18) is fixed has a vertex (28) corresponding to the intersection between a first and a second side of the quadrilateral and the tension point situated in this corner is at most a distance dₛ away from this vertex (28), where dₛ is less than half of the length of the longest of the first and second sides.

9. Lining according to Claim 8, in which the distance dₛ is less than one quarter of the length of the longest of the first and second sides.

10. Vehicle bonnet or hood comprising:
- a skin (11), and
- a lining (12) to stiffen this skin,
**characterized in that** the lining (12) is in accordance with any one of the preceding claims.

## Patentansprüche

1. Auskleidung (12) zur Aussteifung der Haut (11) einer Fahrzeugmotorhaube (10), wobei diese Auskleidung (12) im Wesentlichen die Form eines Vierecks mit vier Ecken aufweist und eine Verstärkung (18) zur Verstärkung der Torsionfestigkeit der Auskleidung (12) um einen Abstützpunkt (42) einer Strebe (22) umfasst, wobei diese Verstärkung in einer ersten Ecke der Auskleidung (12) über Befestigungspunkte (34 bis 39) starr befestigt ist, **dadurch gekennzeichnet, dass** mindestens drei Befestigungspunkte (37 bis 39), die Verankerungspunkte genannt werden, auf einer Verankerungsachse (48) ausgerichtet sind, die senkrecht zu einer Kraftachse (50) verläuft, die durch den Abstützpunkt (42) der Strebe (22) und durch einen Zugpunkt (28) geht, der sich im Wesentlichen in einer Ecke befindet, die der Ecke diagonal gegenüberliegt, in der die erste Verstärkung (18) befestigt ist.

2. Auskleidung nach Anspruch 1, wobei die Verankerungspunkte (37 bis 39) unter allen Befestigungspunkten in der Richtung der diagonal gegenüberliegenden Ecke am weitesten vor dem Abstützpunkt (42) liegen.

3. Auskleidung nach einem der vorhergehenden Ansprüche, wobei die Auskleidung (12) nur drei auf der Verankerungsachse (48) ausgerichtete Befestigungspunkte (37 bis 39) umfasst.

4. Auskleidung nach einem der vorhergehenden Ansprüche, wobei die Verstärkung (18) Öffnungen oder Vorsprünge (40) umfasst, die dazu bestimmt sind, Mittel zur Befestigung eines ersten Scharniers an der Auskleidung (12) aufzunehmen, das ein Klappen der Motorhaube (10) zwischen einer offenen Position und einer geschlossenen Position gestattet.

5. Auskleidung nach Anspruch 4, wobei die Auskleidung (12) eine weitere Verstärkung (20) umfasst, die Öffnungen oder Vorsprünge umfasst, die dazu bestimmt sind, Mittel zur Befestigung eines zweiten Scharniers in einer anderen Ecke der Auskleidung (12) an der Auskleidung (12) aufzunehmen, wobei dieses zweite Scharnier ein Klappen der Motorhaube (10) zwischen ihrer offenen Position und ihrer geschlossenen Position gestattet, wobei diese Verstärkung (20) nur dazu ausgelegt ist, die Mittel zur Befestigung des zweiten Scharniers zu verstärken.

6. Auskleidung nach einem der vorhergehenden Ansprüche, wobei die Verankerungspunkte (37 bis 39) Schweißpunkte sind.

7. Auskleidung nach einem der vorhergehenden Ansprüche, wobei sich die Auskleidung (12) im Wesentlichen in einer Auskleidungsebene erstreckt und die Verankerungspunkte (37 bis 39) zwischen Flächen der Verstärkung (20) und der Auskleidung (12) ausgeführt sind, die sich parallel zur Ebene der Auskleidung (12) erstrecken.

8. Auskleidung nach einem der vorhergehenden Ansprüche, wobei die der Ecke, in der die erste Verstärkung (18) befestigt ist, diagonal gegenüberliegende Ecke einen Scheitel (28) aufweist, der dem Schnittpunkt einer ersten und einer zweiten Seite des Vierecks entspricht, und der in dieser Ecke angeordnete Zugpunkt höchstens um einen Abstand dₛ von diesem Scheitel (28) entfernt ist, wobei dₛ kleiner als die Hälfte der Länge der längeren der ersten und zweiten Seite ist.

9. Auskleidung nach Anspruch 8, wobei der Abstand dₛ kleiner als ein Viertel der Länge der längeren der ersten und zweiten Seite ist.

10. Fahrzeugmotorhaube mit
- einer Haut (11) und
- einer Auskleidung (12) zur Aussteifung dieser Haut,
**dadurch gekennzeichnet, dass** die Auskleidung (12) einem der vorhergehenden Ansprüche entspricht.
